Europäisches Patentamt

**European Patent Office**

**Office européen des brevets**

(11) Veröffentlichungsnummer: **0 026 453**
**B1**

(12) **EUROPÄISCHE PATENTSCHRIFT**

(45) Veröffentlichungstag der Patentschrift:
**25.01.84**

(51) Int. Cl.³: **H 02 K 24/00,** H 01 Q 3/00

(21) Anmeldenummer: **80105752.2**

(22) Anmeldetag: **24.09.80**

(54) **Einrichtung mit einem Resolver für Radarantennen.**

(30) Priorität: **27.09.79 DE 2939160**

(43) Veröffentlichungstag der Anmeldung:
**08.04.81 Patentblatt 81/14**

(45) Bekanntmachung des Hinweises auf die Patenterteilung:
**25.01.84 Patentblatt 84/4**

(84) Benannte Vertragsstaaten:
**CH FR GB IT LI NL SE**

(56) Entgegenhaltungen:
**DE - B - 1 034 518**
**FR - A - 1 377 054**
**GB - A - 741 923**
**GB - A - 753 373**
**US - A - 2 726 382**
**US - A - 2 777 336**
**US - A - 2 823 326**
**US - A - 2 829 344**
**US - A - 3 258 982**

(73) Patentinhaber: **SIEMENS AKTIENGESELLSCHAFT**
**Berlin und München, Wittelsbacherplatz 2,**
**D-8000 München 2 (DE)**

(72) Erfinder: **Kreisel, Friedrich, Ing. grad., Blumenstrasse 20,**
**D-8150 Holzkirchen (DE)**
Erfinder: **Birkle, Reinhard, Ing. grad., Gartenstrasse 20,**
**D-8131 Andechs (DE)**

## Einrichtung mit einem Resolver für Radarantennen

Die Erfindung betrifft eine Einrichtung mit einem Resolver für Radarantennen, insbesondere Rundsuch-Radarantennen, die einen Antennenspiegel besitzen, der an einem feststehenden Teil der Antennenkonstruktion (Antennenbasis) drehbar gelagert ist.

Mobile Radarantennen sind mit einem Resolver ausgestattet. Dieser dient zum Ermitteln der momentanen Antennenstellung. Nach jedem Standortwechsel ist es notwendig, die Antenne wieder neu nach Norden auszurichten. Die Einordnung kann mit einem Kreiselkompass oder näherungsweise mit einem Richtfernrohr vorgenommen werden. In beiden Fällen muss der Resolver nachgestellt, d.h. auf den Spannungsnullpunkt oder den sogenannten Nulldurchgang eingestellt werden. Hierbei soll das Verstellen des Resolvers manuell vorgenommen werden. Bisher ist es üblich, den Resolver durch Drehen seines Gehäuses einzustellen. Dies hat jedoch den Nachteil, dass sich die Anschlussleitungen aufwickeln und somit das Resolvergehäuse nur in einem begrenzten Winkelbereich verdreht werden kann.

Die Erfindung liegt nun die Aufgabe zugrunde, bei einer Einrichtung der eingangs genannten Art die manuelle Verstellung des Resolvers in einem Winkelbereich von 360° zu ermöglichen.

Diese Aufgabe wird bei einer Einrichtung der eingangs genannten Art gemäss der Erfindung dadurch gelöst, dass der Resolver feststehend in einem Anschlussteil aufgenommen und mit diesem zu einer lösbar an der Antennenbasis befestigbaren Baueinheit vereinigt ist, dass an dieser Baueinheit eine Einstellvorrichtung drehbar um die Rotorwelle des Resolvers gelagert ist, dass die Einstellvorrichtung mit einem mit dem Antrieb des Antennenspiegels in Eingriff stehenden Antrieb koppelbar und mit einer von aussen betätigbaren, mit der Rotorwelle koppelbaren Einstellwelle ausgebildet und in einer der Nordstellung des Antennenspiegels zugeordneten Position arretierbar ist.

Bei der erfindungsgemässen Einrichtung ist der Resolver feststehend angeordnet und mit seiner Anschlusskonstruktion zu einer Baueinheit vereinigt. Dies hat den Vorteil, dass die Resolverbaueinheit zusammen mit der Einstellvorrichtung als Ganzes schnell und in einfacher Weise von der Antennenbasis gelöst und ausgetauscht werden kann. Ein wesentlicher Vorteil der erfindungsgemässen Einrichtung besteht in der feststehenden Anordnung des Resolvers in der Anschlusskonstruktion sowie in der Einstellmöglichkeit der Rotorwelle des Resolvers von aussen. Bei einer erfindungsgemässen Einrichtung ist es daher nicht mehr erforderlich, zur Einstellung des Resolvers dessen Gehäuse zu verdrehen. Ein Aufwickeln der Anschlussleitungen des Resolvers ist somit ausgeschlossen. Der Resolver kann daher ohne weiteres in einem Winkelbereich von 360° auf den Nulldurchgang eingestellt werden. Ein weiterer Vorteil der erfindungsgemässen Einrichtung liegt darin, dass sie die Grundeinstellung (Nulldurchgang) des Resolvers in besonders einfacher Weise ermöglicht.

Eine besonders vorteilhafte Ausführungsform einer bei der erfindungsgemässen Einrichtung vorgesehenen Resolverbaueinheit ergibt sich, wenn das Anschlussteil mit einer im Grundriss dreieckförmigen Wanne und einem tubusförmigen Mittelteil zur Aufnahme des Resolvers ausgebildet ist. Die Wanne bietet dabei Platz zur Aufnahme weiterer mechanischer oder elektrischer Elemente.

Zweckmässigerweise ist bei einer derartigen Resolverbaueinheit die Wanne an ihren Eckbereichen mit Bohrungen für Befestigungsschrauben ausgebildet. Auf diese Weise ist eine sichere Dreipunktbefestigung der Resolverbaueinheit an der Antennenbasis geschaffen.

Bei einer erfindungsgemässen Einrichtung, bei der das Anschlussteil mit einem tubusförmigen Mittelteil ausgebildet ist, ist es vorteilhaft, wenn an dem tubusförmigen Mittelteil des Anschlussteils ein Kugellager zur drehbaren Lagerung des Antriebes und der Einstellvorrichtung angeordnet ist. Damit ist die drehbare Lagerung des Antriebes und gleichzeitig der Einstellvorrichtung mit lediglich einem Drehlager ausgebildet.

Bei einer erfindungsgemässen Einrichtung lässt sich eine einfache Kupplung zwischen dem Antrieb und der Einstellvorrichtung dadurch verwirklichen, dass zur Kopplung zwischen dem Antrieb und der Einstellvorrichtung diese mit einer aus zwei Klemmplättchen und zwei Schrauben bestehenden Klemmvorrichtung versehen ist. Bei entsprechender Ausbildung der Einstellvorrichtung und des Antriebes kann diese Klemmvorrichtung gleichzeitig auch auf das Drehlager einwirken.

Zweckmässigerweise ist bei einer vorteilhaften Ausführungsform einer erfindungsgemässen Einrichtung die Einstellvorrichtung mit einem Handgriff ausgebildet, in welchem die Einstellwelle drehbar gelagert ist, wobei die Einstellwelle in einem in dem Handgriff drehbaren Teil gelagert ist. Dabei erfolgt die Voreinstellung des Resolvers auf Nulldurchgang durch Drehen der Einstellwelle, die zweckmässigerweise durch eine Klemmschraube feststellbar ist.

Die Feineinstellung des Resolvers auf Nulldurchgang wird bei einer vorteilhaften Ausführungsform einer erfindungsgemässen Einrichtung dadurch bewirkt, dass der Handgriff mit einer auf das Teil tangential einwirkenden Einstellschraube und einer dieser tangential entgegenwirkenden Feder versehen ist.

Schliesslich ist es zwecks Arretierung der Einstellvorrichtung in einer der Nordstellung des Antennenspiegels zugeordneten Position vorteilhaft, wenn die Einstellvorrichtung an ihrem Aussenumfang mit einer Nut für einen in der Antennenbasis gelagerten Schieber ausgebildet ist.

Weitere vorteilhafte Ausgestaltungen des Gegenstandes des Patentanspruchs 1 sind in den abhängigen Ansprüchen angegeben.

Ein vorteilhaftes Ausführungsbeispiel einer erfindungsgemässen Einrichtung ist im folgenden anhand einer Zeichnung näher beschrieben.

Fig. 1 zeigt die Einrichtung in einer Seitenansicht im Schnitt,

Fig. 2 eine Teilansicht II,

Fig. 3 eine Draufsicht der Einrichtung.

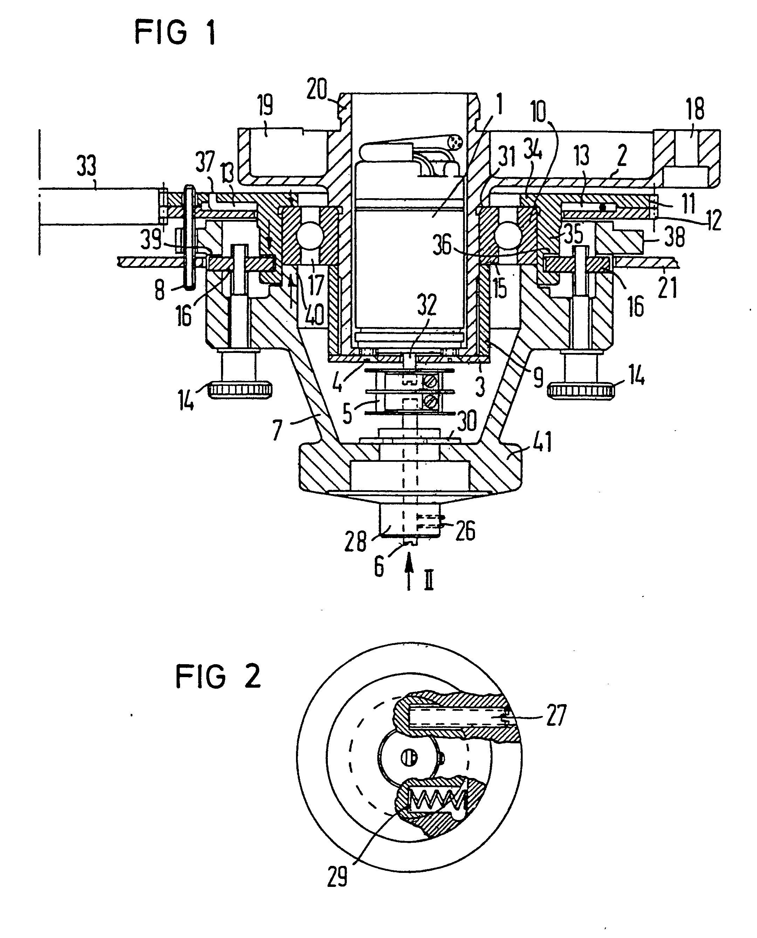

Die Einrichtung nach Fig. 1 weist einen Resolver 1 auf, der in einem Anschlussteil 2 aufgenommen und mit diesem zu einer Baueinheit vereinigt ist. Das Anschlussteil 2 ist mit einer in Draufsicht etwa dreieckförmigen Wanne 19 und an deren Eckbereichen mit Bohrungen 18 für Befestigungsschrauben ausgebildet, so dass das Anschlussteil 2 und damit die ganze Resolverbaueinheit mittels Schraubverbindungen lösbar an einem nicht näher dargestellten, feststehenden Teil der Antennenkonstruktion (Antennenbasis) befestigt werden kann. Zur Aufnahme des Resolvergehäuses 1 ist das Anschlussteil 2 mit einem tubusförmigen, am wannenseitigen Ende offenen Mittelteil 20 ausgebildet, an dessen am anderen Ende das Mittelteil abschliessenden Boden das Resolvergehäuse 1 mittels einer zusätzlichen, von aussen angesetzten Bodenplatte 3 und diese von der Aussenseite her durchdringender Schrauben 4 feststehend gehalten ist. Die Bodenplatte 3 hat eine grössere lichte Aussenweite als das Mittelteil 20, so dass sie mit einem Rand über das Mittelteil hinaussteht. Mittels dieses Randes der Bodenplatte 3 wird ein das Mittelteil 20 umschliessender Klemmring 9 gegen den Innenring 15 eines auf das Mittelteil 20 aufgeschobenen Kugellagers 17 gedrückt, so dass das Kugellager zwischen dem Klemmring 9 und einem Absatz 31 des Mittelteiles festgespannt ist. Das Kugellager 17 dient zur drehbaren Lagerung einer Einstellvorrichtung 7 um die Rotorwelle 32 des Resolvers als Drehachse sowie zur drehbaren Lagerung eines aus zwei miteinander verspannten Zahnrädern 11, 12 bestehenden Antriebes, der mit einem um die Drehachse des Antennenspiegels drehbaren Antriebszahnrad 33 in Eingriff steht und mit der Einstellvorrichtung 7 in noch näher zu beschreibender Weise koppelbar ist. Der aus den Zahnrädern 11, 12 bestehende Antrieb ist wie folgt ausgebildet. Das Zahnrad 11 ist mit einem Innenring 34 und einer Nabe 35 versehen, wobei der Innendurchmesser der Nabe dem Aussendurchmesser des von der Nabe umschlossenen Kugellager-Aussenringes 10 entspricht und der Innendurchmesser des Innenringes 34 kleiner ist als der Aussendurchmesser des Kugellager-Aussenringes 10, so dass der Innenring 34 auf dem Kugellager-Aussenring aufliegt.

Die Nabe 35 des Zahnrades 11 ist breiter als der Kugellager-Aussenring, so dass es über dessen dem Innenring 34 abgewandte Stirnseite hinaussteht. Ausserdem ist die Nabe 35 an ihrem Aussenumfang noch mit einer Ringnut 36 versehen. Das andere Zahnrad 12 umschliesst die Nabe 35 und ist mit dem Zahnrad 11 so verspannt, dass die beiden Zahnräder gegeneinander verdreht werden können. Hierzu sind die beiden Zahnräder an den einander zugekehrten Flachseiten ausgespart und mit einer Drehfeder 13 ausgebildet, welche in den Zwischenraum zwischen den beiden Zahnrädern 11 und 12 eingelegt und mit einem freien Ende 37 in das Zahnrad 11 eingehängt ist. Die Feder 13 verdreht die Zahnräder 11 und 12 so gegeneinander, dass der Zahn eines Zahnrades zumindest teilweise über eine Zahnlücke des anderen Zahnrades zu liegen kommt. Bei der Herstellung des Eingriffes zwischen dem Antriebszahnrad 33 und den Zahnrädern 11 und 12 können diese beiden Zahnräder gegen die Federkraft so gegeneinander verdreht werden, dass sich Zähne und Zahnlücken der beiden Zahnräder decken. Um diese Stellung zu fixieren, wird durch die Zahnräder 11 und 12 sowie durch einen Aussenring 38 der Einstellvorrichtung 7 ein Arretierstift 8 gesteckt. Im Betriebszustand ist dieser Arretierstift 8 jedoch entfernt, so dass die Feder 13 zwischen den beiden Zahnrädern 11 und 12 diese derart gegeneinander verdreht, dass die Zahnflanken der Zahnräder 11 und 12 spielfrei gegen entsprechende Zahnflanken des Antriebszahnrades 33 gedrückt werden. Zur Kopplung des aus den beiden Zahnrädern 11 und 12 bestehenden Antriebes mit der Einstellvorrichtung 7 ist diese mit einer einfachen Klemmvorrichtung versehen, die aus zwei Klemmplättchen 16 und zwei Rändelschrauben 14 besteht. Die Klemmplättchen 16 greifen einerseits in eine schlitzartige Ausnehmung 39 der Einstellvorrichtung und andererseits in die bereits erwähnte Aussenringnut 36 der Zahnradnabe 35 ein. Neben der Klemmvorrichtung ist die Einstellvorrichtung 7 zur Kopplung mit dem Zahnradantrieb 11, 12 noch mit einem Klemmring 40 für den Kugellager-Aussenring 10 ausgebildet, der gerade in die Zahnradnabe 35 hineinpasst. Die Klemmwirkung und damit die Kopplung zwischen dem Zahnradantrieb 11, 12 und der Einstellvorrichtung 7 erfolgt nun durch Festschrauben der Rändelschrauben 14, wodurch das Antriebszahnrad 11 und die Einstelleinrichtung 7 mit dem Innenring 34 bzw. dem Klemmring 40 in Richtung der eingezeichneten kleinen Pfeile gegen die jeweils benachbarte Stirnseite des Kugellager-Aussenringes 10 gedrückt werden, so dass der Zahnrad-Antrieb 11, 12 und die damit lösbar gekoppelte Einstelleinrichtung 7 nunmehr um die Rotorwelle 32 des Resolvers 1 drehbar sind.

Zur Einstellung der Resolverrotorwelle 32 auf Nulldurchgang ist die Einstellvorrichtung 7 mit einer in ihrem Handgriff 41 vorgesehenen, nach aussen ragenden und daher von aussen zu betätigenden Einstellwelle 6 versehen, wobei ein im Handgriff 41 der Einstellvorrichtung 7 drehbar gelagertes und durch einen Sicherungsring 30 in axialer Richtung gehaltenes Teil 28 als Verbindungsstück zwischen dem Resolverrotor und dem Handgriff 41 dient. Zur Kopplung der Einstellwelle 6 und der Rotorwelle 32 ist schliesslich noch eine mechanische Kupplung 5 vorgesehen. Bei gelöster Klemmung der Klemmplättchen 16 verhindern diese zusätzlich, dass die Einstellvorrichtung 7 an der Einstellwelle 6 hängt und dadurch die Kupplung 5 belastet wird.

Die Grundeinstellung (Nulldurchgang) des Resolvers 1 wird durch eine Vor- und eine Feineinstellung erreicht. Sie wird werksseitig auf einem Messplatz mit vorbestimmter Messstrecke vorgenommen. Die Voreinstellung erfolgt durch Drehen der Einstellwelle 6, z.B. mittels eines Schraubenziehers und anschliessender Klemmung durch eine seitlich in das aus dem Handgriff 41 herausragende Teil 28 eingedrehte Klemmschraube 26. Die Feineinstellung erfolgt durch Drehen einer Einstellschraube 27 in die entsprechende Richtung, wobei die Schraube 27 in der aus Fig. 2 ersichtlichen Weise so in den Handgriff 41 eingedreht ist, dass sie auf das Teil 28 tangential einzuwirken imstande ist. Das Teil 28 wird ausserdem noch durch eine parallel zur Einstellschraube 27 in dem Handgriff 41 angeordnete Feder 29 verspannt, welche der Einstellschraube 27 tangential entgegenwirkt.

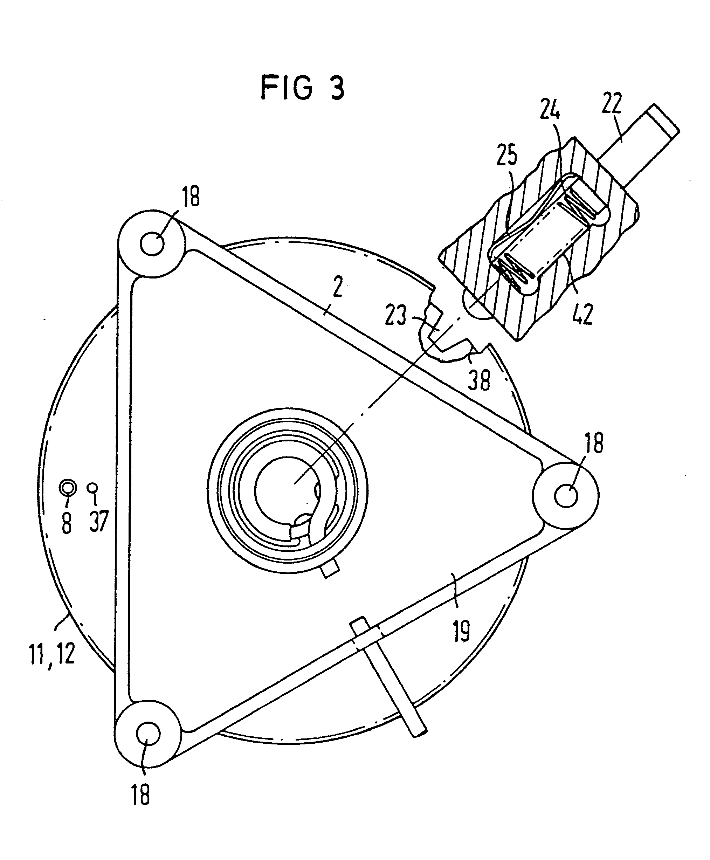

Einer Radarantenne, z.B. einer mobilen Rundsuch-Radarantenne, die in beliebiger Stellung im Gelände aufgestellt wird, muss nach der Einstellung der elektrischen Achse (Empfangskeule) der Antenne z.B. mittels Richtfernrohr auf Nord, z.B. auf einen in Nordrichtung befindlichen Sender, die Grundeinstellung (Nulldurchgang) des Resolvers zugeordnet werden. Dazu dient ein Schieber 22 (Fig. 3), der in einer in der Antennenbasis vorgesehenen Führungsnut gelagert ist. Durch Einschieben des Schiebers 22 in eine Nut 23, welche am Aussenring 38 der in die entsprechende Eingriffsstellung zu drehenden Einstellvorrichtung 7 vorgesehen ist, steht der Resolverrotor 32 zu seinem Gehäuse in Grundstellung. Um nun zu verhindern, dass der Schieber 22 bei Betrieb selbsttätig in die Nut 23 einrastet, wird der Schieber durch eine in der Aufnahme 42 der Antennenbasis gelagerte Feder 24 in seiner Lage gehalten. Durch eine weitere seitliche Feder 25 in der Aufnahme 42 wird das Führungsspiel des Schiebers ausgeglichen.

Bei einer neuerlichen Ausrichtung der Antenne nach Norden nach einem Standortwechsel wird nach dieser Ausrichtung die Einstellvorrichtung 7 so lange gedreht, bis die Nut 23 des Aussenringes 38 der Einstellvorrichtung 7 dem Schieber 22 gegenüberliegt, dieser dann in die Nut eingeschoben werden kann und somit die zur Nordposition der Antenne in bezug stehende Position der Einstellvorrichtung und damit den Nulldurchgang des Resolvers fixiert. Dann erfolgt die Kopplung zwischen dem Antrieb 11, 12 und der Einstellvorrichtung 7 mittels der Klemmplättchen 16.

**Patentansprüche**

1. Einrichtung mit einem Resolver für Radarantennen, insbesondere Rundsuch-Radarantennen, die einen Antennenspiegel besitzen, der an einem feststehenden Teil der Antennenkonstruktion (Antennenbasis) drehbar gelagert ist, dadurch gekennzeichnet, dass der Resolver (1) feststehend in einem Anschlussteil (2) aufgenommen und mit diesem zu einer lösbar an der Antennenbasis befestigbaren Baueinheit vereinigt ist, dass an dieser Baueinheit eine Einstellvorrichtung (7) drehbar um die Rotorwelle (32) des Resolvers (1) gelagert ist, dass die Einstellvorrichtung (7) mit einem mit dem Antrieb (33) des Antennenspiegels in Eingriff stehenden Antrieb (11, 12) koppelbar und mit einer von aussen betätigbaren, mit der Rotorwelle (32) koppelbaren Einstellwelle (6) ausgebildet und in einer der Nordstellung des Antennenspiegels zugeordneten Position arretierbar ist.

2. Einrichtung nach Anspruch 1, dadurch gekennzeichnet, dass das Anschlussteil (2) mit einer im Grundriss dreieckförmigen Wanne (19) und einem tubusförmigen Mittelteil (20) zur Aufnahme des Resolvers (1) ausgebildet ist.

3. Einrichtung nach Anspruch 2, dadurch gekennzeichnet, dass die Wanne (19) an ihren Eckbereichen mit Bohrungen (18) für Befestigungsschrauben ausgebildet ist.

4. Einrichtung nach Anspruch 2 oder 3, dadurch gekennzeichnet, dass das tubusförmige Mittelteil (20) zur Befestigung des Resolvers (1) mit einer Bodenplatte (3) versehen ist.

5. Einrichtung nach einem der Ansprüche 2 bis 4, dadurch gekennzeichnet, dass an dem tubusförmigen Mittelteil (20) des Anschlussteils (2) ein Kugellager (17) zur drehbaren Lagerung des Antriebes (11, 12) und der Einstellvorrichtung (7) angeordnet ist.

6. Einrichtung nach Anspruch 5, dadurch gekennzeichnet, dass das Kugellager (17) mittels eines das tubusförmige Mittelteil (20) umschliessenden Klemmringes (9) und eines Absatzes (31) am Mittelteil festgespannt ist.

7. Einrichtung nach einem der vorhergehenden Ansprüche, dadurch gekennzeichnet, dass der mit der Einstellvorrichtung (7) koppelbare Antrieb aus zwei miteinander verspannten Zahnrädern (11, 12) besteht und dass zwischen den beiden Zahnrädern eine die Zahnräder gegeneinander verdrehende Drehfeder (13) eingelegt ist.

8. Einrichtung nach Anspruch 7, dadurch gekennzeichnet, dass ein Zahnrad (11) des mit der Einstellvorrichtung (7) koppelbaren Antriebs mit einem auf das Kugellager (17) einwirkenden Innenring (34) und einer Nabe (35) versehen ist, welche an ihrem Aussenumfang eine Ringnut (36) aufweist.

9. Einrichtung nach einem der vorhergehenden Ansprüche, dadurch gekennzeichnet, dass zur Kopplung zwischen dem Antrieb (11, 12) und der Einstellvorrichtung (7) diese mit einer aus zwei Klemmplättchen (16) und zwei Schrauben (14) bestehenden Klemmvorrichtung versehen ist.

10. Einrichtung nach Anspruch 9, dadurch gekennzeichnet, dass die Einstellvorrichtung (7) mit jeweils einer schlitzartigen Ausnehmung (39) für die Klemmplättchen (16) ausgebildet ist.

11. Einrichtung nach einem der vorhergehenden Ansprüche, dadurch gekennzeichnet, dass die Einstellvorrichtung (7) mit einem auf das Kugellager (17) einwirkenden Klemmring (40) versehen ist.

12. Einrichtung nach einem der vorhergehenden Ansprüche, dadurch gekennzeichnet, dass die Einstellvorrichtung (7) mit einem Handgriff (41) ausgebildet ist, in welchem die Einstellwelle (6) drehbar gelagert ist.

13. Einrichtung nach Anspruch 12, dadurch gekennzeichnet, dass die Einstellwelle (6) in einem in dem Handgriff (41) drehbaren Teil (28) gelagert ist.

14. Einrichtung nach Anspruch 13, dadurch gekennzeichnet, dass der Handgriff (41) mit einer auf das Teil (28) tangential einwirkenden Einstellschraube (27) und einer dieser tangential entgegenwirkenden Feder (29) versehen ist.

15. Einrichtung nach einem der vorhergehenden Ansprüche, dadurch gekennzeichnet, dass die Einstellvorrichtung (7) an ihrem Aussenumfang mit einer Nut (23) für einen in der Antennenbasis gelagerten Schieber (22) ausgebildet ist.

16. Einrichtung nach einem der vorhergehenden Ansprüche, dadurch gekennzeichnet, dass zur Kopplung zwischen der Rotorwelle (32) und der Einstellwelle (6) eine mechanische Kupplung (5) vorgesehen ist.

**Claims**

1. A radar antennae resolver device, in particular surveillance radar antennae, having an antenna reflector pivot-mounted on a stationary component of the antenna construction (antenna base), characterised in that the resolver (1) is accommodated in a coupling component (2) so as to be stationary and is combined therewith in order to form a structural unit detachably secured to the antenna base, that an adjusting device (7) is mounted on this structural unit so as to be rotatable about the rotor shaft (32) of the resolver (1), that the adjusting device (7) can be coupled to a drive means (11, 12) which is in engagement with the drive (33) of the antenna reflector, and is provided with an adjusting shaft (6) which can be externally actuated and can be coupled to the rotor shaft (32), and can be locked in a position assigned to the north position of the antenna reflector.

2. A device as claimed in claim 1, characterised in that the coupling component (2) is provided with a trough (19) which is triangular in plan view, and with a tube-shaped central component (20) which serves to accommodate the resolver (1).

3. A device as claimed in claim 2, characterised in that bores (18) for securing screws are provided at the corner zones of the trough (19).

4. A device as claimed in claim 2 or 3, characterised in that the tube-shaped central component (20) is provided with a base plate (3) for the attachment of the resolver (1).

5. A device as claimed in one of the claim 2 to 4, characterised in that a ball bearing (17) for the pivot-mounting of the drive means (11, 12) and of the adjusting device (7) is arranged on the tube-shaped central component (20) of the coupling component (2).

6. A device as claimed in claim 5, characterised in that the ball bearing (17) is clamped to the central component by means of a clamping ring (9) which encloses the tube-shaped central component (20) and by means of a shoulder (31).

7. A device as claimed in one of the preceding claims, characterised in that the drive which can be coupled to the adjusting device (7) consist of two gear wheels (11, 12) braced one to another, and that a torsion spring (13) is arranged between the two gear wheels to rotate the gear wheels relative to one another.

8. A device as claimed in claim 7, characterised in that one gear wheel (11) of the drive which can be coupled to the adjusting device (7) is provided with an inner ring (34) which acts upon the ball bearing (17) and with a hub (35) which possesses an annular groove (36) at its outer periphery.

9. A device as claimed in one of the preceding claims, characterised in that the adjusting device is provided with a clamping device which consists of two clamping plates (16) and two screws (14) in order that the drive (11, 12) may be coupled to the adjusting device (7).

10. A device as claimed in claim 9, characterised in that the adjusting device (7) is provided with one slot-like recess (39) for each of the clamping plates (16).

11. A device as claimed in one of the preceding claims, characterised in that the adjusting device (7) is provided with a clamping ring (40) which acts upon the ball bearing (17).

12. A device as claimed in one of the preceding claims, characterised in that the adjusting device (7) is provided with a handle (41) in which the adjusting shaft (6) is pivot mounted.

13. A device as claimed in claim 12, characterised in that the adjusting shaft (6) is mounted in a component (28) which can be rotated in the handle (41).

14. A device as claimed in claim 13, characterised in that the handle (41) is provided with an adjusting screw (27) which acts tangentially upon the component (28), and with a spring (29) which tangentially counteracts the adjusting screw.

15. A device as claimed in one of the preceding claims, characterised in that at its outer periphery the adjusting device (7) is provided with a groove (23) for a sliding member (22) which is mounted in the antenna base.

16. A device as claimed in one of the preceding claims, characterised in that a mechanical coupling (5) is provided for the coupling between the rotor shaft (32) and the adjusting shaft (6).

**Revendications**

1. Dispositif comportant un résolveur pour des antennes de radar, notamment des antennes de radar panoramiques de surveillance qui comportent un réflecteur d'antenne qui est monté de façon à pouvoir tourner sur une pièce de la construction d'antenne (base d'antenne), caractérisé par le fait que le résolveur (1) est logé de façon fixe dans une pièce de raccordement (2) et est réuni à celle-ci pour former une unité constitutive qui peut être fixée de façon amovible sur la base d'antenne, qu'un dispositif de réglage (7) est monté sur cette unité constitutive de façon à pouvoir tourner autour de l'arbre (32) du rotor du résolveur (1), et que le dispositif de réglage (7) peut être accouplé à un entraînement (11, 12) engrenant avec l'entraînement (33) du réflecteur d'antenne, et comporte un arbre de réglage (6), pouvant être accouplé à l'arbre (32) du rotor et être actionné de l'extérieur, et peut être bloqué dans une position associée à l'alignement sur le nord du réflecteur d'antenne.

2. Dispositif suivant la revendication 1, caractérisé par le fait que la pièce de raccordement (2) est formée par une cuvette (19) triangulaire en projection horizontale et par une pièce centrale tubulaire (20) pour recevoir le résolveur (1).

3. Dispositif suivant la revendication 2, caractérisé par le fait que la cuvette (19) est munie au niveau de ses sommets de perçages (18) pour des vis de fixation.

4. Dispositif suivant la revendication 2 ou 3, caractérisé par le fait que la pièce centrale tubulaire (20) est munie d'une plaque de fond (3) pour la fixation du résolveur (1).

5. Dispositif suivant l'une des revendications 2 à 4, caractérisé par le fait qu'un palier à billes (17), pour le montage avec rotation de l'entraînement (11, 12) et du dispositif de réglage (7), est disposé sur la pièce centrale tubulaire (20) de la pièce de raccordement (2).

6. Dispositif suivant la revendication 5, caractérisé par le fait que le palier à billes (17) est bloqué sur la pièce centrale au moyen d'une bague de serrage (9) qui entoure la pièce centrale tubulaire (20) et d'un épaulement (31).

7. Dispositif suivant l'une des revendications précédentes, caractérisé par le fait que l'entraînement qui peut être couplé au dispositif de réglage (7) est constitué par deux roues dentées (11, 12) couplées l'une avec l'autre, et qu'entre les deux roues dentées est monté un ressort de torsion (13) faisant tourner les roues dentées l'une par rapport à l'autre.

8. Dispositif suivant la revendication 7, caractérisé par le fait qu'une roue dentée (11) de l'entraînement qui peut être couplé au dispositif de réglage (7) est munie d'une bague intérieure (34) qui agit sur le palier à billes (17) et d'un moyeu (35) qui comporte une rainure annulaire (36) sur sa périphérie extérieure.

9. Dispositif suivant l'une des revendications précédentes, caractérisé par le fait que pour l'accouplement entre l'entraînement (11, 12) et le dispositif de réglage (7), celui-ci est muni d'un dispositif de serrage constitué par deux plaquettes de serrage (16) et deux vis (14).

10. Dispositif suivant la revendication 9, caractérisé par le fait que le dispositif de réglage (7) est respectivement muni d'un évidement (39) en forme de fente pour les plaquettes de serrage (16).

11. Dispositif suivant l'une des revendications précédentes, caractérisé par le fait que le dispositif de réglage (7) est muni d'une bague de serrage (40) qui agit sur le palier à billes (17).

12. Dispositif suivant l'une des revendications précédentes, caractérisé par le fait que le dispositif de réglage (7) est muni d'une poignée (41) dans laquelle l'arbre de réglage (6) est monté de façon à pouvoir tourner.

13. Dispositif suivant la revendication 12, caractérisé par le fait que l'arbre de réglage (6) est monté dans une pièce (28) qui peut tourner dans la poignée (41).

14. Dispositif suivant la revendication 13, caractérisé par le fait que la poignée (41) est munie d'une vis de réglage (27) qui agit tangentiellement sur la pièce (28) et d'un ressort (29) qui agit tangentiellement à l'encontre de celle-ci.

15. Dispositif suivant l'une des revendications précédentes, caractérisé par le fait que le dispositif de réglage (7) est muni sur sa périphérie extérieure d'une rainure (23) pour un organe coulissant (22) monté dans la base d'antenne.

16. Dispositif suivant l'une des revendications précédentes, caractérisé par le fait qu'un accouplement mécanique (5) est prévu pour l'accouplement de l'arbre (32) du rotor et de l'arbre de réglage (6).

# FIG 1

# FIG 2

# FIG 3